# EUROPÄISCHE PATENTANMELDUNG

(11) **EP 4 726 689 A1**
(43) Veröffentlichungstag der Anmeldung: **15.04.2026**
(21) Anmeldenummer: 25197688.2
(22) Anmeldetag: 22.08.2025
(51) Int. Cl.: G07F 9/10, G07F 11/00, G07F 11/16, G07F 11/28, G07F 11/70, G07F 17/00

(54) **LEBENSMITTELAUTOMAT ZUR ABGABE VON LEBENSMITTELN**

(30) Priorität: 14.10.2024 DE 102024129629
(71) Anmelder: Festo SE & Co. KG, 73734 Esslingen (DE)
(72) Erfinder: Pudewills, Leif, 73728 Esslingen (DE); Keusch, Petra, 71134 Aidlingen (DE); Hopfengart, Hans-Jörg, 73779 Aichwald (DE); Keusch, Siegfried, 73207 Plochingen (DE); Waibel, Tobias, 73760 Ostfildern (DE)
(74) Vertreter: Patentanwälte Magenbauer & Kollegen Partnerschaft mbB

(57) **Zusammenfassung**

Die Erfindung betrifft ein Lebensmittelautomaten (1) zur Abgabe von Lebensmitteln (31), mit einem Maschinenrahmen (2), dem eine Warenauslage (3, 4) zur Ablage von Lebensmitteln (31), ein Bildverarbeitungssystem (41) zur optischen Erfassung einer räumlichen Anordnung von Lebensmitteln (31), ein Manipulator (51) zur Handhabung von Lebensmitteln (31) und eine mit dem Bildverarbeitungssystem (41) gekoppelte Manipulatorsteuerung (74) zugeordnet sind, wobei die Manipulatorsteuerung (74) zur Ansteuerung des Manipulators (51) in Abhängigkeit von der räumlichen Anordnung der Lebensmittel (31) ausgebildet ist und wobei dem Manipulator (51) ein Zwischenspeicher (23) zugeordnet ist, der für eine Zwischenspeicherung einer vom Manipulator (51) bereitgestellten Auswahl von Lebensmitteln (31) sowie für einen Abtransport der Auswahl von Lebensmitteln (3131) an eine Verpackungseinheit (30) oder an eine Warenausgangsschnittstelle ausgebildet ist.

## Beschreibung

Die Erfindung betrifft einen Lebensmittelautomat zur Abgabe von Lebensmitteln. Bei einem aus dem Stand der Technik bekannten Lebensmittelautomat sind unterschiedliche, jeweils verpackte Lebensmittel wie beispielsweise Getränkedosen, Energieriegel, Sandwiches, in horizontal ausgerichteten Lagerschächten innerhalb eines Maschinenrahmens aufgenommen, wobei der Maschinenrahmen mit Verkleidungsteilen versehen ist, um ein geschlossenes Maschinengehäuse zu bilden. Jedem der Lagerschächte ist eine Fördereinrichtung zugeordnet, mit der das im Lagerschacht aufgenommene Lebensmittel nach einer Anforderung durch einen Kunden in horizontaler Richtung in einen Abgabeschacht gefördert werden kann. Bei Eintritt in den Abgabeschacht fällt das Lebensmittel nach unten in einen Entnahmebereich, der abseits der Lagerschächte angeordnet ist. Dieser Entnahmebereich ist mit einer schwenkbeweglichen Klappe versehen, um eine Entnahme der angeforderten Lebensmittel durch den Kunden zu ermöglichen, ohne dass hierbei ein Zugriff auf die Lagerschächte ermöglicht wird. Bei einer Weiterbildung eines derartigen Lebensmittelautomaten ist im Abgabeschacht ein vertikal verlagerbares Tablett vorgesehen, das jeweils auf das Niveau des Lagerschachtes bewegt werden kann, aus dem ein Lebensmittel abgegeben werden soll. Nachdem das Lebensmitte aus dem Schacht auf das Tablett ausgeschoben wurde, wird das Tablett anschließend in vertikaler Richtung nach unten gefahren, um dem Kunden die Entnahme des angeforderten Lebensmittels zu ermöglichen.

Die Aufgabe der Erfindung besteht darin, einen Lebensmittelautomaten bereitzustellen, mit dem unverpackt gelagerte Lebensmittel an Kunden abgegeben werden können.

Diese Aufgabe wird dadurch gelöst, dass der Lebensmittelautomat einen Maschinenrahmen aufweist, dem eine Warenauslage zur Ablage von Lebensmitteln, ein Bildverarbeitungssystem zur optischen Erfassung einer räumlichen Anordnung von Lebensmitteln, ein Manipulator zur Handhabung von Lebensmitteln und eine mit dem Bildverarbeitungssystem gekoppelte Manipulatorsteuerung zugeordnet sind, wobei die Manipulatorsteuerung zur Ansteuerung des Manipulators in Abhängigkeit von der räumlichen Anordnung der Lebensmittel ausgebildet ist und wobei dem Manipulator ein Zwischenspeicher zugeordnet ist, der für eine Zwischenspeicherung einer vom Manipulator bereitgestellten Auswahl von Lebensmitteln sowie für einen Abtransport der Auswahl von Lebensmitteln an eine Verpackungseinheit oder an eine Warenausgangsschnittstelle ausgebildet ist.

Der Maschinenrahmen kann als Anordnung von Profilteilen oder als Kombination von Profilteilen und Verkleidungsteilen oder als Anordnung von Verkleidungsteilen ausgebildet sein und bildet das mechanische Grundgerüst für den Lebensmittelautomaten. Vorzugsweise ist der Maschinenrahmen mit Verkleidungsteilen versehen, um ein geschlossenes Maschinengehäuse zu bilden.

Am Maschinenrahmen ist eine Warenauslage angeordnet, die zur Ablage von Lebensmitteln ausgebildet ist. In Abhängigkeit von der Art der Lebensmittel, die mit Hilfe des Lebensmittelautomaten verkauft werden sollen, kann die Warenauslage als Tablett mit einer ebenen Oberfläche oder als Tablett mit einer Vielzahl von Vertiefungen, die insbesondere in einem vorgegebenen Raster angeordnet sind, ausgebildet sein. Vorzugsweise ist die Warenauslage in einer Weise angeordnet, die eine Betrachtung der dort ausgelegten Lebensmittel durch einen Kunden erleichtert. Dies kann beispielsweise dadurch gewährleistet werden, dass die Warenauslage gegenüber einer Horizontalebene leicht geneigt ausgerichtet ist, sodass ein Kunde, der beispielsweise durch eine am Maschinenrahmen festgelegte Sichtscheibe die Lebensmittel auf der Warenauslage betrachten möchte, zumindest die meisten auf der Warenauslage abgelegten Lebensmittel betrachten kann.

Ferner umfasst der Lebensmittelautomat einen Manipulator, mit dem einzelne Lebensmittel auf die Warenauslage aufgelegt oder von der Warenauslage abgenommen werden können. Hierzu weist der Manipulator einen Greifer auf, mit dem das jeweilige Lebensmittel kraftschlüssig und/oder formschlüssig gegriffen werden kann. Ferner ermöglicht der Manipulator eine räumliche Verlagerung von Lebensmitteln in drei jeweils paarweise senkrecht zueinander ausgerichteten Raumrichtungen. Vorzugsweise ist vorgesehen, dass zwei der senkrecht zueinander ausgerichteten Raumrichtungen des Manipulators eine Bewegungsebene aufspannen, die parallel zu einer Oberfläche der Warenauslage ausgerichtet ist. Die dritte Raumrichtung kann parallel zu einer Flächennormale auf die Oberfläche der Warenauslage ausgerichtet sein oder beispielsweise in einer auch als Lotrechte bezeichneten Vertikalrichtung ausgerichtet sein. Der Manipulator kann beispielsweise als Mehrachs-Industrieroboter mit elektrischen und/oder pneumatischen und/oder hydraulischen Antriebseinrichtungen ausgebildet sein.

Um einen zielgerichteten Greifvorgang für Lebensmittel, die beispielsweise auf der Warenauslage abgelegt sind, durch den Manipulator zu ermöglichen, ist einer Manipulatorsteuerung, die für die Ansteuerung der jeweiligen Antriebseinrichtungen des Manipulators ausgebildet ist, ein Bildverarbeitungssystem zugeordnet. Dieses Bildverarbeitungssystem umfasst einen optischen Sensor, insbesondere eine Kamera, um Bildsignale zu erzeugen. Diese Bildsignale werden von einem Mikroprozessor des Bildverarbeitungssystems mit Hilfe eines auf dem Mikroprozessor ablaufenden Computerprogramms ausgewertet. Aus den Bildsignalen werden Informationen abgeleitet, mit denen die Manipulatorsteuerung die Ansteuerung der Antriebseinrichtungen des Manipulators vornehmen kann. Bei der Manipulatorsteuerung kann es sich ebenfalls um einen Mikroprozessor mit entsprechender elektrischer und elektronischer Peripherie handeln, auf dem ein Computerprogramm abläuft, das dazu ausgebildet ist, anhand der Informationen, die vom Bildverarbeitungssystem zur Verfügung gestellt werden, sowie gegebenenfalls von Sensorsignalen von Sensoren, die dem Manipulator zugeordnet sind, eine gezielte Steuerung(open loop) oder Regelung (closed loop) der einzelnen Antriebseinrichtungen des Manipulators vorzunehmen. Vorteilhaft ist es, wenn die Manipulatorsteuerung dazu ausgebildet ist, eine Inventarliste für die auf der Warenauslage abgelegten Lebensmittel zu führen, um stets aktuelle Informationen hinsichtlich des Vorhandenseins von Lebensmitteln an spezifischen Orten auf der Warenauslage für eine nachfolgende Durchführung von Greifvorgängen mittels des Manipulators zur Verfügung zu haben. Beispielsweise werden Lebensmittel, die auf die Warenauslage aufgelegt werden, in die Inventarliste eingebucht, während Lebensmittel, die von der Warenauslage aufgenommen werden, aus der Inventarliste ausgebucht werden.

Dem Manipulator ist ein Zwischenspeicher zugeordnet, der dazu ausgebildet ist, mehrere in sequenzieller Reihenfolge vom Manipulator von der Warenauslage gegriffene Lebensmittel zwischenzuspeichern. Der Zwischenspeicher ist mit dem Manipulator gekoppelt, sodass Bewegungen des Manipulators in zumindest einer vorgegebenen Raumrichtung, insbesondere längs einer vertikal ausgerichteten Raumrichtung, unmittelbar auch zu einer Bewegung des Zwischenspeichers in dieser Raumrichtung führen. Der Zwischenspeicher kann als, insbesondere ebene, Ablagefläche oder Behälter mit einer konkaven Geometrie ausgebildet sein und ist für eine zeitgleiche Zwischenlagerung mehrerer Lebensmittel dimensioniert.

Anschließend an eine Anordnung einer Auswahl von Lebensmitteln auf dem Zwischenspeicher bzw. in dem Zwischenspeicher kann in einem nachfolgenden Schritt vorgesehen sein, diese Auswahl von Lebensmitteln an eine Verpackungseinheit zur Verfügung zu stellen. Die Verpackungseinheit hat die Aufgabe, die Auswahl von Lebensmitteln zu verpacken und an einer Warenausgangsschnittstelle für den Kunden zur Verfügung zu stellen. Alternativ kann in einem nachfolgenden Schritt vorgesehen werden, die Auswahl von Lebensmitteln, die auf dem Zwischenspeicher bzw. im Zwischenspeicher abgelegt wurden, unmittelbar an die Warenausgangsschnittstelle zur Verfügung zu stellen. Insbesondere kann vorgesehen sein, dass die Auswahl von Lebensmitteln bereits beim Ablegen in den Zwischenspeicher in einer Verpackung aufgenommen werden, die dann anschließend an der Warenausgangsschnittstelle für den Kunden zur Verfügung gestellt wird.

Vorteilhafte Weiterbildungen der Erfindung sind Gegenstand der Unteransprüche.

Zweckmäßig ist es, wenn am Maschinenrahmen eine Warenträgeraufnahme angeordnet ist, die zur Aufnahme eines Warenträgers ausgebildet ist und wenn das Bildverarbeitungssystem für eine Erfassung von Lebensmitteln, die auf dem Warenträger angeordnet sind, ausgebildet ist. Beispielhaft ist vorgesehen, dass die Warenträgeraufnahme an einer Rückseite des Lebensmittelautomaten angeordnet ist, die einer Vorderseite des Lebensmittelautomaten abgewandt ist, wobei die Vorderseite des Lebensmittelautomaten dem Kunden zugewandt ist. Vorzugsweise ist der Lebensmittelautomat derart in einem Gebäude, insbesondere einem Einzelhandelsgeschäft, aufgestellt, dass die Rückseite des Lebensmittelautomaten lediglich für die Angestellten, nicht jedoch für die Kunden zugänglich ist. Die Warenträgeraufnahme kann insbesondere als Halterung für Tabletts, Backbleche oder Kisten ausgebildet sein. Hierbei wird davon ausgegangen, dass die Lebensmittel, die auf oder in dem jeweiligen Warenträger angeordnet sind, keine präzise räumliche Anordnung zueinander aufweisen. Dementsprechend ist das Bildverarbeitungssystem dazu eingerichtet, ungeordnet auf dem Warenträger angeordnete Lebensmittel zu erfassen und daraus Informationen abzuleiten, die an die Manipulatorsteuerung zur Verfügung gestellt werden, um anschließend ein gezieltes Greifen einzelner Lebensmittel sowie einen Transport des jeweils gegriffenen Lebensmittels auf die Warenauslage zu ermöglichen. Bevorzugt ist vorgesehen, dass die Warenträgeraufnahme derart ausgebildet ist, dass ein daran aufgenommener Warenträger eine identische oder zumindest ähnliche räumliche Ausrichtung wie die Warenauslage hat. Beispielhaft ist vorgesehen, dass eine Oberfläche der Warenauslage eine Auslageebene bestimmt, auf der die Lebensmittel vom Manipulator abgelegt und auch wieder gegriffen werden können und dass eine Oberfläche des Warenträgers in dieser Auslageebene oder parallel zur Auslageebene ausgerichtet ist. Durch diese Maßnahme wird die Anzahl von Bewegungen, die der Manipulator ausführen muss, um ein Lebensmittel vom Warenträger aufzunehmen und auf der Warenauslage abzulegen, gering gehalten, womit eine schnelle Übergabe von Lebensmitteln vom Warenträger auf die Warenauslage ermöglicht wird. Besonders bevorzugt ist vorgesehen, dass zumindest der optische Sensor des Bildverarbeitungssystems, der insbesondere als Kamera ausgebildet sein kann, in vertikaler Richtung oberhalb der Warenträgeraufnahme angeordnet ist, um eine schnelle Erfassung der auf einem neu an der Warenträgeraufnahme festgelegten Warenträger angeordneten (üblicherweise ungeordneten) Lebensmittel zu ermöglichen.

Gegebenenfalls ist vorgesehen, dass an der Warenträgeraufnahme eine Informationsschnittstelle ausgebildet ist, die für eine kontaktgebundene oder kontaktlose Informationsübertragung zwischen dem Warenträger und dem Bildverarbeitungssystem und/oder der Manipulatorsteuerung ausgebildet ist. Beispielhaft kann vorgesehen sein, dass mit der Anordnung eines Warenträgers an der Warenträgeraufnahme Informationen über die Eigenschaften, beispielsweise über ein durchschnittliches Gewicht der Lebensmittel und/oder über eine maximale Druckbelastbarkeit des Lebensmittels oder andere Eigenschaften des Lebensmittels wie ein Herstellungszeitpunkt oder eine maximale Haltbarkeit, die in einem Speichermedium am Warenträger gespeichert sind, über die Informationsschnittstelle übertragen werden.

Alternativ kann vorgesehen sein, dass am Warenträger eine unmittelbar vom Bildverarbeitungssystem ablesbare Information, beispielsweise ein Barcode oder ein QR-Code, angebracht ist, um hierüber wesentliche Informationen über die Lebensmittel auf dem Warenträger an die Manipulatorsteuerung bereitstellen zu können, ohne dass hierfür eine Informationsschnittstelle bereitgestellt werden muss.

Besonders bevorzugt ist vorgesehen, dass der Lebensmittelautomat zusätzlich zu der Manipulatorsteuerung oder integriert in die Manipulatorsteuerung eine Warenwirtschaftssteuerung umfasst. Diese Warenwirtschaftssteuerung kann somit wahlweise als separater Computer mit entsprechender Software oder als Programmmodul in der Manipulatorsteuerung integriert sein. Die Warenwirtschaftssteuerung ist dazu ausgebildet, Informationen über Lebensmittel, die auf den Warenträgern an den Lebensmittelautomaten angeliefert werden, zu speichern. Bei diesen Informationen kann es sich beispielsweise um Chargennummern oder andere Kenngrößen handeln, die in Zusammenhang mit der Lieferung und/oder Herstellung der Lebensmittel stehen. Ergänzend oder alternativ können die Informationen darauf gerichtet sein, wie lange das jeweilige Lebensmittel verkaufsfähig ist (Mindesthaltbarkeitsdatum) und wann gegebenenfalls ein Sonderangebot für das jeweilige Lebensmittel ausgegeben werden kann, wenn beispielsweise das Erreichen des Mindesthaltbarkeitsdatums kurz bevorsteht. Ferner kann die Warenwirtschaftssteuerung auch Informationen darüber erfassen, speichern und gegebenenfalls an ein übergeordnetes Warenwirtschaftssystem ausgeben, die darauf ausgerichtet sind, ob ein Lebensmittel noch im Lebensmittelautomaten befindlich ist oder bereits verpackt wurde und auf dem Weg zur Kasse ist, sofern keine Bezahlung unmittelbar vor Ort am Lebensmittelautomaten vorgesehen sein sollte. Die Warenwirtschaftssteuerung kann auch dazu ausgebildet sein, auf Basis statistischer Methoden eine Nachbestellung von Lebensmitteln auszulösen, wenn sich abzeichnet, dass die im Lebensmittelautomaten aufgenommenen Lebensmittel entweder abverkauft werden oder das jeweilige Mindesthaltbarkeitsdatum in absehbarer Zeit erreicht wird. Beispielsweise kann vorgesehen sein, dass die Warenwirtschaftssteuerung einen Backauftrag ausgibt, wenn mehr als 50 Prozent der im Lebensmittelautomaten aufgenommenen Backwaren abverkauft wurden.

Vorteilhaft ist es, wenn das Bildverarbeitungssystem für eine Erkennung von geometrischen Eigenschaften der Lebensmittel, die auf dem Warenträger abgelegt sind, sowie für eine Berechnung von Greifkoordinaten für das jeweilige Lebensmittel sowie für eine Bereitstellung der Greifkoordinaten an die Manipulatorsteuerung ausgebildet ist. Bei den Lebensmitteln, die auf dem Warenträger abgelegt und mit dem Manipulator auf die Warenauslage befördert werden sollen, handelt es sich insbesondere um Naturprodukte, handwerklich hergestellte Produkte oder industriell hergestellte Produkte. Dementsprechend können die Lebensmittel, bei denen es sich beispielsweise um Obst, Gemüse oder Backwaren handeln kann, erhebliche Formtoleranzen aufweisen.

Um eine möglichst beschädigungsfreie Beförderung dieser Lebensmittel gewährleisten zu können, muss der Manipulator die Lebensmittel mit möglichst geringen Greifkräften greifen, weshalb exakte Informationen über die Eigenschaften der Lebensmittel, insbesondere über Größe, Form, Masse und Ausrichtung der Lebensmittel, erforderlich sind. Daher besteht die Aufgabe für das Bildverarbeitungssystem, zunächst die räumliche Anordnung sowie die individuellen Maße der einzelnen Lebensmittel zu erfassen und anschließend aus diesen Informationen die Greifkoordinaten für den Greifer des Manipulators zu berechnen. Als Greifkoordinaten werden insbesondere der Tool Center Point (TCP) des Greifers und die zum beschädigungsfreien Greifen der Lebensmittel notwendigen Werte für das Öffnen und Schließen des Greifers ermittelt und anschließend an die Manipulatorsteuerung weitergegeben.

Bei Verwendung eines symmetrisch ausgebildeten Greifers zum Ergreifen eines zumindest im Wesentlichen kugelförmig ausgebildeten Lebensmittels wie beispielsweise eines Apfels kann vorgesehen sein, dass der TCP des Greifers für die Durchführung des Greifvorgangs auf einer Achse liegt, die normal zur Oberfläche des Warenträgers ausgerichtet ist. Insbesondere kann vorgesehen sein, das der TCP im Schwerpunkt des Lebensmittels angeordnet ist. Ferner muss der Greifer für die Durchführung des Greifvorgangs zunächst so weit geöffnet werden, dass eine Annäherung an das Lebensmittel ohne mechanischen Kontakt zwischen Greifflächen des Greifers und dem Lebensmittel erfolgt. Beim anschließenden Ergreifen des Lebensmittels wird eine Schließbewegung der Greifflächen des Greifers durchgeführt, bei der einerseits ein sicheres Greifen des Lebensmittels gewährleistet werden muss und andererseits eine Druckbelastung auf das Lebensmittel unterhalb eines vorgegebenen Maximaldrucks gehalten wird.

Bevorzugt ist vorgesehen, dass die Manipulatorsteuerung dazu ausgebildet ist, den Manipulator derart anzusteuern, dass Lebensmittel in Abhängigkeit von ihrer räumlichen Anordnung vom Warenträger aufgenommen und in einer vorgegebenen räumlichen Anordnung auf der Warenauslage abgelegt werden und dass Lebensmittel in Abhängigkeit von einem Auswahlauftrag von der Warenauslage aufgenommen und an den Zwischenspeicher bereitgestellt werden. Hierbei wird davon ausgegangen, dass die Lebensmittel, die auf dem Warenträger angeordnet sind, keine vorgegebene räumliche Anordnung, beispielsweise in einem fest vorgegebenen Raster, aufweisen. Vielmehr sind die Lebensmittel auf dem Warenträger zumindest soweit ungeordnet angeordnet, dass zunächst für jedes der Lebensmittel mit Hilfe des Bildverarbeitungssystems eine Berechnung von Greifkoordinaten sowie Öffnungswerten für den Greifer und Schließwerten für den Greifer durchgeführt werden muss. Nach der Durchführung dieser Berechnung für einzelne Lebensmittel oder die Gesamtheit der Lebensmittel, die auf dem Warenträger angeordnet sind, kann der Manipulator das jeweilige Lebensmittel vom Warenträger aufnehmen und auf die Warenauslage befördern. Bei der Warenauslage ist vorgesehen, dass die Lebensmittel in einer vorgegebenen räumlichen Anordnung vom Manipulator platziert werden, wobei diese Platzierung beispielsweise in einem quadratischen Raster oder in einer anderen vorgegebenen Weise vorgenommen werden kann. Hierbei ist vorgesehen, dass die Position jedes der auf der Warenauslage angeordneten Lebensmittels so lange in der Manipulatorsteuerung gespeichert bleibt, bis das Lebensmittel vom Manipulator in den Zwischenspeicher befördert wurde. Gegebenenfalls kann vorgesehen sein, dass der Manipulator in zeitlich wiederkehrenden Abständen oder auf Bedieneranforderung eine Umsortierung der auf der Warenauslage angeordneten Lebensmittel durchführt, um ein vorteilhaftes Erscheinungsbild für die dort aufliegenden Lebensmittel zu gewährleisten.

Bei einer Weiterbildung der Erfindung ist vorgesehen, dass am Maschinengestell mehrere Warenauslagen angeordnet sind, deren Oberflächen in einer Vertikalrichtung beabstandet und parallel zueinander ausgerichtet sind und dass der Manipulator längs der Vertikalrichtung linearbeweglich am Maschinenrahmen aufgenommen ist. Hierdurch wird eine hohe Speicherdichte für Lebensmittel im Lebensmittelautomaten ermöglicht. Bevorzugt ist vorgesehen, dass auf jeder der Warenauslagen jeweils genau ein Lebensmitteltyp abgelegt ist. Alternativ kann vorgesehen sein, dass auf einer Warenauslage oder auf mehreren Warenauslagen unterschiedliche Lebensmitteltypen angeordnet sind. Durch die parallele Ausrichtung der Warenauslagen wird sichergestellt, dass der Manipulator beim Ergreifen oder Ablegen von Lebensmitteln auf der jeweiligen Warenauslage keine Rücksicht auf unterschiedliche räumliche Ausrichtungen der Warenauslagen nehmen muss, wodurch eine komplexe dreidimensionale Ansteuerung des Manipulators vermieden werden kann. Bevorzugt ist vorgesehen, dass die Auslageebenen der Warenauslagen einen Winkel mit einer Vertikalrichtung, die auch als Lotrichtung bezeichnet wird, einnehmen, der beispielsweise in einem Intervall von 65 Grad bis 85 Grad enthalten ist. Um eine kostengünstige Ausgestaltung des Manipulators gewährleisten zu können, ist vorgesehen, dass Aufnahmebewegungen und Absetzbewegungen des Manipulators für die Lebensmittel längs der Vertikalrichtung durchgeführt werden, während Verlagerungsbewegungen für die Lebensmittel, die der Manipulator vornimmt, im Wesentlichen parallel zu den Auslageebenen der jeweiligen Warenauslagen erfolgen. Die Verlagerung des Manipulators mit dem daran an gekoppelten Zwischenspeicher längs der Vertikalrichtung erfolgt vorzugsweise durch einen elektrischen oder pneumatischen oder hydraulischen Antrieb. Besonders bevorzugt ist vorgesehen, dass der Manipulator mit dem Zwischenspeicher an einem Schlitten aufgenommen sind, der seinerseits linearbeweglich längs einer in Vertikalrichtung ausgerichteten Führungsschiene gelagert ist und dass der Schlitten von einem Elektromotor mit Gewindespindelantrieb oder Zahnriemenantrieb längs der Vertikalrichtung bewegt werden kann.

In weiterer Ausgestaltung der Erfindung ist vorgesehen, dass der Zwischenspeicher eine Ablagefläche aufweist, die für eine Aufnahme eines Transportbehälters, insbesondere einer Faltschachtel, ausgebildet ist. Bei dieser Ausgestaltung des Zwischenspeicher wird davon ausgegangen, dass die vom Manipulator von der Warenauslage aufgenommenen Lebensmittel unmittelbar in einem Transportbehälter abgelegt werden, bei dem es sich beispielsweise um eine Wanne oder Schachtel handeln kann, wobei ein Verschließen des Transportbehälters entweder automatisiert oder vom Kunden durchgeführt wird oder der Transportbehälter ohne Deckel für einen offenen Transport der darin aufgenommenen Lebensmittel ausgelegt ist.

Alternativ ist vorgesehen, dass der Zwischenspeicher als Aufnahmeschacht mit einer umlaufenden Schachtwand ausgebildet ist, wobei die Schachtwand eine Aufnahmeöffnung und eine Abgabeöffnung bestimmt, wobei der Abgabeöffnung ein beweglich an der Schachtwand gelagerter Verschluss zugeordnet ist, um die Abgabeöffnung wahlweise zu öffnen oder zu verschließen, und wobei die Aufnahmeöffnung in vertikaler Richtung oberhalb der Abgabeöffnung angeordnet ist. Die Verwendung eines Aufnahmeschachtes als Zwischenspeicher kann für den Fall vorgesehen werden, dass die auf der Warenauslage ausgelegten Lebensmittel mechanisch nicht besonders empfindlich sind, wie dies beispielsweise für Kleinbackwaren, insbesondere für Brötchen, angenommen werden kann. In diesem Fall ist vorgesehen, dass die vom Manipulator von der Warenauslage aufgenommenen Lebensmittel zunächst im Aufnahmeschacht gesammelt werden. Anschließend erfolgt eine Freigabe der Abgabeöffnung durch eine Relativbewegung des an der Schachtwand gelagerten Verschlusses aus einer Schließstellung in eine Öffnungsstellung. Hierbei fällt die Auswahl von Lebensmitteln in einen vertikal unterhalb des Zwischenspeichers angeordneten Transportbehälter, insbesondere einen Faltkarton oder eine Tüte. Beispielhaft kann vorgesehen sein, dass der Verschluss aus der Schließstellung in die Öffnungsstellung überführt wird, wenn der Manipulator mit dem daran angebrachten Zwischenspeicher längs der Vertikalrichtung in eine Entladestellung bewegt wird, wodurch Zwangs-Schwenkbewegung des Verschlusses um eine Schwenkachse bewirkt wird. Sobald sich der Manipulator mit dem Zwischenspeicher aus der Entladestellung in vertikaler Richtung nach oben bewegt, führt eine Federeinrichtung zu einem automatisierten Schließvorgang für den Verschluss, sodass eine neue Auswahl von Lebensmitteln im Aufnahmeschacht aufgenommen werden kann.

Bei einer vorteilhaften Weiterbildung der Erfindung ist vorgesehen, dass am Maschinengestell eine Verpackungseinheit angeordnet ist, die zur Bereitstellung einer Verpackung aus einem Verpackungsspeicher, zum Öffnen der Verpackung sowie zum Verschließen der Verpackung nach Entgegennahme der im Zwischenspeicher zwischengespeicherten Auswahl von Lebensmitteln ausgebildet ist. Beispielhaft ist die Verpackungseinheit dazu ausgebildet, eine Papiertüte aus einem Verpackungsspeicher zu entnehmen, die Papiertüte derart zu öffnen, dass die Tütenöffnung unterhalb des Zwischenspeichers angeordnet ist und nach Aufnahme der Auswahl von Lebensmitteln aus dem Aufnahmeschacht ein Schließvorgang für die Tüte durchgeführt wird.

Bevorzugt ist vorgesehen, dass der Manipulator mehrere Armabschnitte aufweist, die jeweils durch Gelenke miteinander verbunden sind, und dass ein Arbeitsbereich des Manipulators die Warenauslage und den Warenträger umfasst. Besonders bevorzugt ist der Manipulator in der Art eines horizontalen Gelenkarmroboters (SCARA-Roboter) ausgebildet, wobei abweichend von der typischen Konfiguration eines derartigen horizontalen Gelenkarmroboters die Linearachse dem ersten Armabschnitt zugeordnet ist. Beispielhaft ist vorgesehen, dass die Linearachse durch einen Schlitten gebildet wird, der längs der Vertikalrichtung linearbeweglich an einer Profilschiene aufgenommen ist. Hierbei kann vorgesehen sein, dass zwischen dem Schlitten und dem ersten Armabschnitt sowie zwischen dem ersten Armabschnitt und dem zweiten Armabschnitt und zwischen dem zweiten Armabschnitt und dem dritten Armabschnitt jeweils ein Schwenkgelenk mit einer zugeordneten Antriebseinrichtung ausgebildet ist. Der Greifer ist am dritten Armabschnitt angeordnet und weist für die Durchführung der Greifbewegung vorzugsweise einen linearen Freiheitsgrad der Bewegung für wenigstens eine von zumindest zwei gegenüberliegend zueinander angeordneten Greifbacken auf, wobei eine Antriebseinrichtung für die Bewegung der wenigstens einen Greifbacke im dritten Armabschnitt untergebracht sein kann.

In weiterer Ausgestaltung der Erfindung ist vorgesehen, dass die Warenauslagen jeweils angrenzend an einen Bewegungsraum für den Manipulator angeordnet sind, in dem der Manipulator mit einer kompakten Anordnung der Armabschnitte in vertikaler Richtung bewegt werden kann. Beispielhaft erstreckt sich der Bewegungsraum mit einer rechteckigen Profilierung längs der Vertikalachse und wird beidseitig von Warenauslagen begrenzt. Hierdurch lässt sich eine effiziente Ausnutzung des maximalen Bewegungsbereichs des Manipulators erzielen, der durch Schwenkbewegungen seiner Armabschnitte sowohl Lebensmittel auf rechts als auch links des Bewegungsraums angeordneten Warenauslagen ablegen bzw. von dort aufnehmen kann. Bei einer kompakten Anordnung des Manipulators wird davon ausgegangen, dass Längsachsen des ersten Armabschnitts und des zweiten Armabschnitts parallel zueinander ausgerichtet sind, sodass eine Projektion des Manipulators auf eine Horizontalebene, die quer zur Vertikalrichtung ausgerichtet ist, eine minimale Fläche aufweist.

Eine vorteilhafte Ausführungsform der Erfindung ist in der Zeichnung dargestellt. Hierbei zeigt:
- Figur 1: eine rein schematische perspektivische Darstellung eines Lebensmittelautomaten,
- Figur 2: eine rein schematische Seitenansicht des Lebensmittelautomaten gemäß der Figur 1, und
- Figur 3: einen schematischen Ausschnitt aus der Figur 1 zur Darstellung der Funktionsweise des Manipulators.

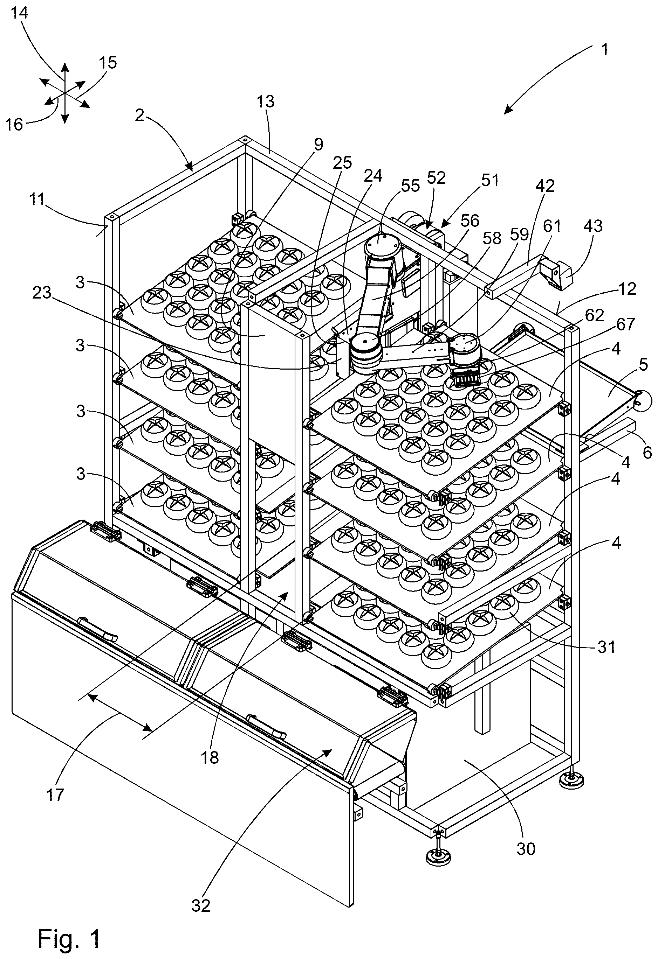

Ein in den Figuren 1 bis 3 rein schematisch dargestellter Lebensmittelautomat 1 ist beispielhaft für einen Verkauf von Backwaren 31 vorgesehen, die der Einfachheit halber als Tafelbrötchen dargestellt sind.

Der Lebensmittelautomat 1 kann beispielsweise in einem Supermarkt eingesetzt werden, wobei er in diesem Fall mit einer nicht dargestellten Verkleidung versehen wird, um einen unmittelbaren Zugriff von Kunden auf die Backwaren 31 zu verhindern und damit auch einen Kontakt der Kunden mit einem Manipulator 51, der zur automatisierten Handhabung der Backwaren vorgesehen ist, auszuschließen. Bevorzugt wird der Lebensmittelautomat 1 zwischen seitlich angrenzenden, nicht dargestellten weiteren Lebensmittelautomaten oder Regalen angeordnet, sodass lediglich eine Vorderseite 11 des Lebensmittelautomaten 1 für Kunden zugänglich ist, während eine Rückseite 12 des Lebensmittelautomaten 1 lediglich aus einem Bedienerbereich zugänglich ist, den nur Angestellte des Supermarkts betreten können. Beispielhaft kann vorgesehen sein, dass in diesem Bedienerbereich zusätzlich ein oder mehrere nicht dargestellte Backöfen aufgestellt sind, in denen insbesondere vorgefertigte, tiefgefrorene Teiglinge aufgebacken werden, die dann zum Verkauf in nachstehend näher beschriebener Weise an den Lebensmittelautomaten 1 bereitgestellt werden.

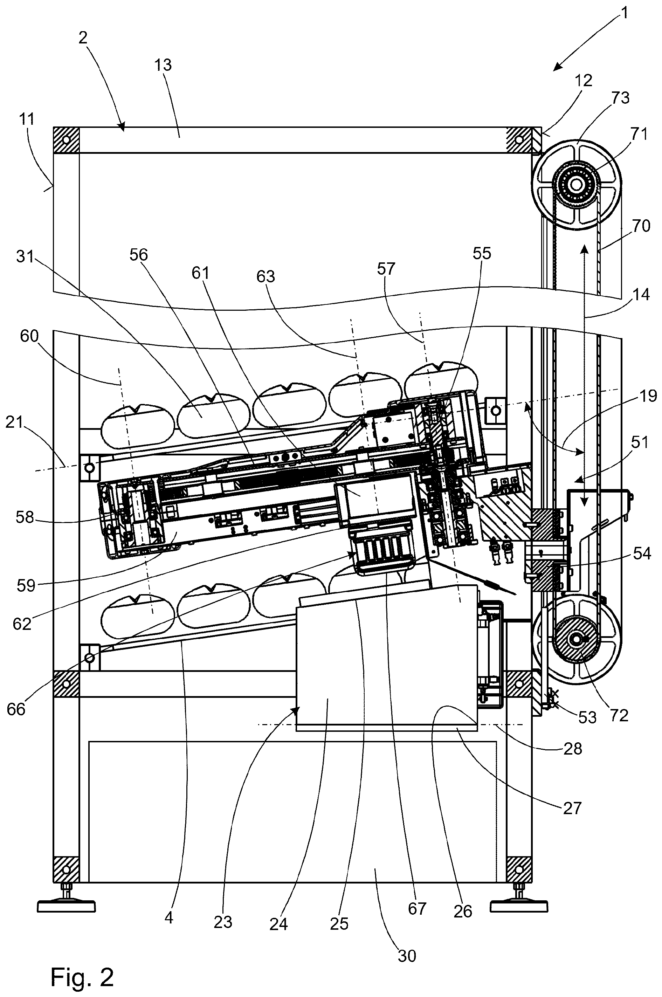

Rein exemplarisch umfasst der Lebensmittelautomat 1 einen Maschinenrahmen 2, der aus einer Vielzahl von horizontal und vertikal ausgerichteten Profilschienen 13 gebildet ist, die durch geeignete Verbindungselemente miteinander verbunden sind. Beispielhaft ist vorgesehen, dass am Maschinenrahmen zwei Gruppen von Warenauslagen 3, 4 angeordnet sind, die jeweils als Planparallelplatten mit quadratischer Grundfläche ausgebildet sind. Die Warenauslagen 3 der ersten Gruppe sind jeweils parallel zueinander ausgerichtet und weisen in einer Vertikalrichtung 14 jeweils den gleichen Abstand auf. Die Warenauslagen 4 der zweiten Gruppe sind jeweils parallel zueinander ausgerichtet und weisen in der Vertikalrichtung 14 jeweils den gleichen Abstand auf. Beispielhaft ist vorgesehen, dass benachbarte Warenauslagen 3, 4 jeweils in einer gemeinsamen, in der Figur 2 schematisch eingezeichneten Auslageebene 21 angeordnet sind.

Die Warenauslagen 3, 4 sind in einer ersten Horizontalrichtung 15 mit einem Abstand 17 zueinander angeordnet, wodurch zwischen den Warenauslagen 3, 4 ein Bewegungsraum 18 freigehalten wird, der in einer nicht eingezeichneten, quer zur Vertikalrichtung 14 ausgerichteten Querschnittsebene einen rechteckigen Querschnitt aufweist.

Ferner ist vorgesehen, dass die Warenauslagen 3, 4 mit der Vertikalrichtung 14 einen Winkel 19 einschließen, der rein exemplarisch 85 Grad beträgt. Hierdurch wird erreicht, dass ein nicht dargestellter Kunde bei Betrachtung der Warenauslagen 3, 4 einen möglichst guten Überblick über sämtliche auf den Warenauslagen 3, 4 aufgelegten Backwaren erhält.

Beispielhaft ist vorgesehen, dass der Bewegungsraum 18 an der Vorderseite 11 des Lebensmittelautomaten 1 zumindest bereichsweise von einer nur schematisch dargestellten Anzeigeeinrichtung 9 begrenzt wird, bei der es sich beispielsweise um einen berührungsempfindlichen Bildschirm (Touchscreen) handeln kann. Diese Anzeigeeinrichtung 9 dient zur Visualisierung von Benutzerinformationen und gegebenenfalls zu Eingabe von Kaufwünschen, die vom Lebensmittelautomaten 1 in nachstehend näher beschriebene Weise umgesetzt werden.

Im Bereich der Rückseite 12 des Lebensmittelautomaten 1 erstreckt sich parallel zu den in vertikaler Richtung ausgerichteten Profilschienen 13 eine Führungsschiene 53, die für eine Linearführung eines Schlittens 54 längs der Vertikalrichtung 14 vorgesehen ist und die in nicht näher dargestellter Weise mit den Profilschienen 13 Maschinenrahmens 2 verbunden ist.

Der Schlitten 54 trägt einen ersten Schwenkantrieb 55, der einen nicht näher dargestellten Elektromotor und ein ebenfalls nicht näher dargestelltes Schwenkgelenk umfasst, wobei das Schwenkgelenk für eine schwenkbewegliche Lagerung eines ersten Armabschnitts 56 gegenüber dem Schlitten 54 ausgebildet ist. Mit dem ersten Schwenkantrieb 55 kann der erste Armabschnitt 56 um eine erste Schwenkachse 57 gegenüber dem Schlitten 54 verschwenkt werden. An einem dem ersten Schwenkantrieb 55 abgewandten Endbereich des ersten Armabschnitts 56 ist ein zweiter Schwenkantrieb angebracht, der einen nicht näher dargestellten Elektromotor und ein nicht näher dargestelltes Schwenkgelenk umfasst, wobei das Schwenkgelenk für eine schwenkbewegliche Lagerung eines zweiten Armabschnitts 59 gegenüber dem ersten Armabschnitt 56 ausgebildet ist. Mit dem zweiten Schwenkantrieb 58 kann der zweite Armabschnitt 59 um eine zweite Schwenkachse 60 gegenüber dem ersten Armabschnitt 56 verschwenkt werden. An einem dem zweiten Schwenkantrieb 58 abgewandten Endbereich des zweiten Armabschnitts 59 ist ein dritter Schwenkantrieb 61 angeordnet, der einen nicht näher dargestellten Elektromotor und einem nicht näher dargestelltes Schwenkgelenk umfasst, wobei das Schwenkgelenk für eine schwenkbewegliche Lagerung eines dritten Armabschnitts 62 gegenüber dem zweiten Armabschnitt 59 ausgebildet ist. Mit dem dritten Schwenkantrieb 61 kann der dritte Armabschnitt 62 gegenüber dem zweiten Armabschnitt 49 um eine dritte Schwenkachsen 63 verschwenkt werden. Wie der Darstellung der Figur 2 entnommen werden kann, sind die erste Schwenkachse 57, die zweite Schwenkachse 60 sowie die dritte Schwenkachse 63 parallel zueinander und normal zur Auslageebene 21 ausgerichtet.

Der dritte Armabschnitt 63 trägt einen Greifer 66, der rein exemplarisch als Zweibackengreifer ausgebildet ist und bei dem die einander gegenüberliegenden Greifbacken 67, von denen in den Darstellungen der Figuren 1 bis 3 jeweils nur eine sichtbar ist, durch einen im dritten Armabschnitts 62 integrierten, nicht näher dargestellten Antrieb linear aneinander angenähert oder voneinander entfernt werden können, um eine Greifbewegung oder Freigabebewegung dieser Greifbacken 67 zu ermöglichen.

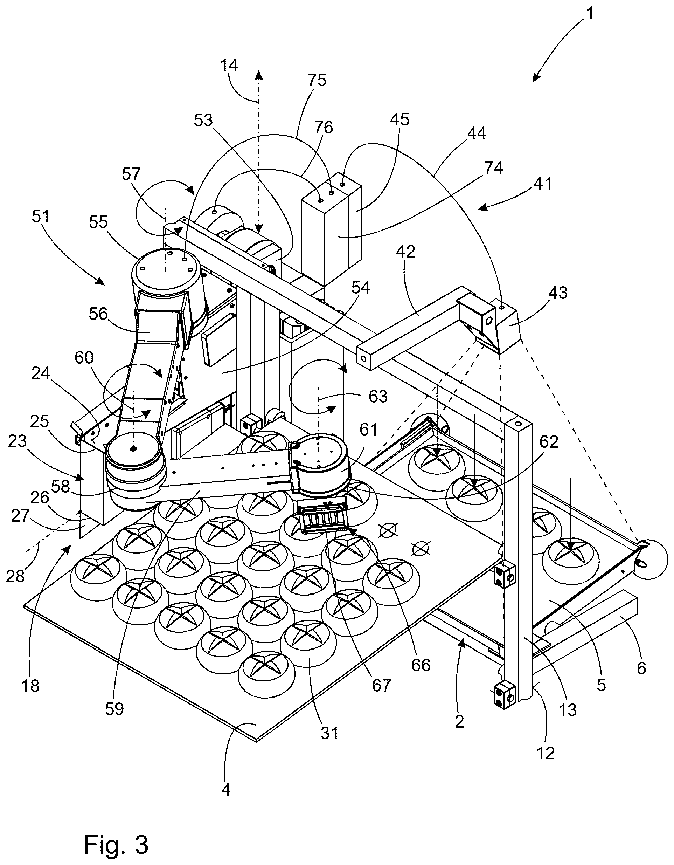

Zusätzlich zum ersten Schwenkantrieb 55 ist am Schlitten 54 ein Zwischenspeicher 23 angeordnet, der rein exemplarisch kastenförmig mit einer in vertikaler Richtung ausgerichteten Schachtwand 24 ausgebildet ist, die eine Aufnahmeöffnung 25 und eine Abgabeöffnung 26 begrenzt. Die Aufnahmeöffnung 25 ist stets geöffnet und ermöglicht somit die Zufuhr von Lebensmitteln, beispielsweise Backwaren 31, in den Zwischenspeicher 23. Die Abgabeöffnung 26 ist gemäß der Darstellung der Figur 2 durch einen plattenförmigen Verschluss 27 verschlossen, sodass in den Zwischenspeicher 23 aufgenommene Backwaren 31 nicht nach unten herausfallen. Gemäß der Darstellung der Figur 3 ist der Verschluss 27 um eine Schwenkachse 28 verschwenkt, wodurch die Abgabeöffnung 26 freigegeben wird und die Backwaren 31 nach unten aus dem Zwischenspeicher 23 abgegeben werden können.

Beispielhaft ist vorgesehen, dass unterhalb des Zwischenspeichers 23 eine nur schematisch dargestellte Verpackungseinrichtung 30 angeordnet ist, die beispielsweise dazu konfiguriert sein kann, die aus dem Zwischenspeicher 23 abgegebenen Backwaren 31 in einen Transportbehälter wie beispielsweise eine Tüte oder Schachtel zu verpacken und diesen Transportbehälter an der Vorderseite 11 des Lebensmittelautomaten 1 an eine schematisch in der Figur 1 gezeigte Ausgabeschnittstelle 32 bereitzustellen, die von einem Kunden geöffnet werden kann, um den darin enthaltenen Transportbehälter zu entnehmen.

Für eine Linearbewegung des Schlittens 54 längs der Führungsschiene 53 ist der Schlitten 54 an einem Zahnriemen 70 festgelegt, der eine erste Riemenscheibe 71 und eine zweite Riemenscheibe 72 jeweils bereichsweise umschlingt, wobei die erste Riemenscheibe 71 in der Vertikalrichtung 14 oberhalb der zweiten Riemenscheibe 72 angeordnet ist. Der ersten Riemenscheibe 72 ist ein Antriebsmotor 73 zugeordnet, der beispielsweise als Elektromotor ausgebildet ist und eine Rotationsbewegung auf die zweite Riemenscheibe 72 einleiten kann, um darüber eine Linearbewegung des Schlitten 54 in der Vertikalrichtung 14 zu bewirken.

Der aus den am Abschnitten 56, 59, 62 mit den zugehörigen Schwenkantrieb 55, 58 und 61 sowie der Führungsschiene 53, dem Schlitten 54, dem Zahnriemen 70 mit den Riemenscheiben 71 und 72 und dem Antriebsmotor 73 gebildete Manipulator 51 ermöglicht das Aufnehmen und Absetzen von Lebensmitteln auf den Warenauslagen 3, 4.

Ferner ist der Manipulator 51 dazu ausgebildet, Lebensmittel von einem Warenträger 5 aufzunehmen, der an einer Warenträgeraufnahme 6 an der Rückseite 12 des Lebensmittelautomaten 1 angebracht werden kann. Beispielhaft ist vorgesehen, dass der Warenträger 5 als Backblech ausgebildet ist und auf dem Warenträger 5 eine Vielzahl von Backwaren 31 in ungeordneter Weise angeordnet sind. Wie der Darstellung der Figuren 1 und 3 entnommen werden kann, ist der Warenträger 5 parallel zur Auslageebene 21 der Warenauslagen 3, 4 ausgerichtet, wodurch ein effizientes Ergreifen und Absetzen von Backwaren 31 durch den Greifer 66 sicherzustellen.

Um dieses zielgerichtete Ergreifen der Backwaren 31 durch den Greifer 66 zu ermöglichen, ist am Maschinenrahmen 2 eine Kamera 43 angeordnet, die entsprechend der gestrichelten Symboldarstellung in der Figur 3 für eine optische Erfassung der gesamten Oberfläche des Warenträgers 5 ausgebildet ist. Die Kamera 43 ist hierzu an einem Kameraträger 42 befestigt, der seinerseits an einer der Profilschienen 13 festgelegt ist. Die Kamera 43 steht über eine elektrische Verbindungsleitung 44 mit einem streng schematisch dargestellten Mikrocomputer 45 in Verbindung, wobei der Mikrocomputer 45 einen nicht näher dargestellten Mikroprozessor enthält, der unter Verwendung eines Computerprogramms zur Aufbereitung und Auswertung der Bildsignale der Kamera 43 ausgebildet ist. Im Zuge der Auswertung der Bildsignale der Kamera 43 ermittelt der Mikrocomputer 45 die Größe und/oder die Form und/oder die Ausrichtung der Backwaren 31 und legt anhand dieser Informationen die Greifkoordinaten für den Greifer 66 fest, mit denen der Greifer 66 die jeweilige Backware 31 ergreifen kann. Diese Greifkoordinaten sind der Figur 3 durch Pfeile über den jeweiligen Backwaren 31, die auf dem Warenträger liegen, symbolisiert. Darüber hinaus kann vorgesehen sein, dass der Mikrocomputer 45 aus den Bildsignalen der Kamera 43 auch einen minimalen Öffnungswert und einen maximalen Schließwert für den Greifer 66 festlegt, um eine beschädigungsfreies aufnehmen und Absetzen der jeweiligen Backware 31 zu ermöglichen. Die Kamera 43 bildet zusammen mit dem Mikrocomputer 45 ein Bildverarbeitungssystem 41.

Der Mikrocomputer 45 steht über eine nicht dargestellten internen Schnittstelle in elektrischer Verbindung mit einer ebenfalls nur schematisch dargestellten Manipulatorsteuerung 74. Die Manipulatorsteuerung 74 umfasst einen nicht näher dargestellten Mikroprozessor, auf dem ein Computerprogramm abläuft, das dazu konfiguriert ist, auf Basis der Informationen, die vom Mikrocomputer 45 bereitgestellt werden, eine Ansteuerung des Manipulators 51 vorzunehmen. Hierzu steht die Manipulatorsteuerung 74 über elektrische Verbindungsleitungen 75, 76 in Verbindung mit dem Manipulator 51.

Eine Betriebsweise für den Lebensmittelautomaten 1 kann wie folgt beschrieben werden:
Zunächst wird von einem nicht dargestellten Bediener ein mit ungeordnet angeordneten Backwaren 31 bestückter Warenträger 5 an der Warenträgeraufnahme 6 angebracht. Anschließend wird eine Erfassung der Backwaren 31, die auf dem Warenträger 5 angeordnet sind, mit der Kamera 43 durchgeführt und die elektrischen Signale der Kamera 43 werden an den Mikrocomputer 45 bereitgestellt. Der Mikrocomputer 45 führt die Erkennung der Form, Größe und räumlichen Anordnung der Backwaren 31 durch und berechnet hieraus die Greifkoordinaten für den Greifer 66 sowie die Öffnungs- und Schließwerte für den Greifer 66. Diese Informationen werden von dem Mikrocomputer 45 an die Manipulatorsteuerung 74 übertragen, die diese Informationen in Bewegungsbefehle für die einzelnen Antriebe (Schwenkantrieb 55, 58, 61 und Antriebsmotor 73) des Manipulators 51 umsetzt und diese Bewegungsbefehle an die Antriebe des Manipulators 51 zur Verfügung stellt.

Somit werden in nachfolgenden Schritten die auf dem Warenträger 5 angeordneten Backwaren 31 auf die Warenauslagen 3, 4 in einer vorgegebenen Anordnung, insbesondere einer Rasteranordnung, abgelegt. Diese Rasteranordnung wird durch die Fadenkreuze, die in der Figur 3 auf der Warenauslage 4 eingezeichnet sein, symbolisiert.

Sobald ein Kunde eine Bestellung von Backwaren 31 an den Lebensmittelautomaten 1 übermittelt, was entweder durch direkte Eingabe an der Anzeigeeinrichtung 9 oder beispielsweise durch Verwendung eines Mobiltelefons mit einer für den Lebensmittelautomaten 1 konfigurierten Software vorgenommen werden kann, entscheidet die Manipulatorsteuerung 74, durch welche Bewegung des Manipulators 51 die gewünschten Backwaren 31 von den Warenauslagen 3, 4 aufgenommen werden. Sofern ein Wechsel des Manipulators 51 zwischen unterschiedlichen Ebenen der Warenauslagen 3, 4 erforderlich ist, wird der Manipulator 51 in eine kompakte Funktionsstellung überführt, in der der erste Armabschnitt 56 und der zweite am Abschnitten 59 parallel zueinander ausgerichtet sind und kollisionsfrei im Bewegungsraum 18 in der Vertikalrichtung 14 verfahren werden können.

Sobald mit den Greifer 66 eine Backware 31 gegriffen wurde, wird diese durch Platzierung des Greifers 66 oberhalb der Aufnahmeöffnung 25 des Zwischenspeichers 23 und Öffnen des Greifers 66 im Zwischenspeicher 23 aufgenommen. Sobald entweder die gewünschte Auswahl von Backwaren 31 im Zwischenspeicher 23 aufgenommen ist oder der Zwischenspeicher 23 eine vorgegebene Kapazität erreicht hat, wird der Manipulator 51 in eine Übergabestellung Verfahren, wie sie schematisch in der Figur 2 gezeigt ist. In dieser Übergabestellung ist eine minimale Abstand zwischen der Abgabeöffnung 26 des Zwischenspeichers 23 und der Verpackungseinheit 30 gewährleistet, sodass in einem nachfolgenden Schritt durch Verschwenken des Verschlusses 27 um die Schwenkachse 28 allein durch die Schwerkraft eine Überführung der im Zwischenspeicher 23 aufgenommenen Backwaren 31 in die Verpackungseinheit 30 vollzogen wird. In der Verpackungseinheit 30 werden die Backwaren in einem Transportbehälter wie beispielsweise einer Tüte oder Schachtel aufgenommen und vorzugsweise ein Verschluss der Transporteinrichtung durchgeführt. Anschließend kann die Transporteinrichtung an der Ausgangsschnittstelle 32 dem Kunden zur Verfügung gestellt werden.

## Patentansprüche

1. Lebensmittelautomat (1) zur Abgabe von Lebensmitteln (31), mit einem Maschinenrahmen (2), dem eine Warenauslage (3, 4) zur Ablage von Lebensmitteln (31), ein Bildverarbeitungssystem (41) zur optischen Erfassung einer räumlichen Anordnung von Lebensmitteln (31), ein Manipulator (51) zur Handhabung von Lebensmitteln (31) und eine mit dem Bildverarbeitungssystem (41) gekoppelte Manipulatorsteuerung (74) zugeordnet sind, wobei die Manipulatorsteuerung (74) zur Ansteuerung des Manipulators (51) in Abhängigkeit von der räumlichen Anordnung der Lebensmittel (31) ausgebildet ist und wobei dem Manipulator (51) ein Zwischenspeicher (23) zugeordnet ist, der für eine Zwischenspeicherung einer vom Manipulator (51) bereitgestellten Auswahl von Lebensmitteln (31) sowie für einen Abtransport der Auswahl von Lebensmitteln (3131) an eine Verpackungseinheit (30) oder an eine Warenausgangsschnittstelle ausgebildet ist.

2. Lebensmittelautomat (1) nach Anspruch 1, **dadurch gekennzeichnet, dass** am Maschinenrahmen (2) eine Warenträgeraufnahme (6) angeordnet ist, die zur Aufnahme eines Warenträgers (5) ausgebildet ist und dass das Bildverarbeitungssystem (41) für eine Erfassung von Lebensmitteln (31), die auf dem Warenträger (4) angeordnet sind, ausgebildet ist.

3. Lebensmittelautomat (1) nach Anspruch 2, **dadurch gekennzeichnet, dass** das Bildverarbeitungssystem (41) für eine Erkennung von geometrischen Eigenschaften der Lebensmittel (31), die auf dem Warenträger (5) abgelegt sind, sowie für eine Berechnung von Greifkoordinaten für das jeweilige Lebensmittel (31) sowie für eine Bereitstellung der Greifkoordinaten an die Manipulatorsteuerung (74) ausgebildet ist.

4. Lebensmittelautomat (1) nach Anspruch 2 oder 3, **dadurch gekennzeichnet, dass** die Manipulatorsteuerung (74) dazu ausgebildet ist, den Manipulator (51) derart anzusteuern, dass Lebensmittel (31) in Abhängigkeit von ihrer räumlichen Anordnung vom Warenträger (5) aufgenommen und in einer vorgegebenen räumlichen Anordnung auf der Warenauslage (3, 4) abgelegt werden und dass Lebensmittel (31) in Abhängigkeit von einem Auswahlauftrag von der Warenauslage (3, 4) aufgenommen und an den Zwischenspeicher (23) bereitgestellt werden.

5. Lebensmittelautomat (1) nach einem der vorhergehenden Ansprüche, **dadurch gekennzeichnet, dass** am Maschinengestell (2) mehrere Warenauslagen (3, 4) angeordnet sind, deren Oberflächen (21) in einer Vertikalrichtung (14) beabstandet und parallel zueinander ausgerichtet sind und dass der Manipulator (51) längs der Vertikalrichtung (14) linearbeweglich am Maschinenrahmen (2) aufgenommen ist.

6. Lebensmittelautomat (1) nach einem der Ansprüche 1 bis 5, **dadurch gekennzeichnet, dass** der Zwischenspeicher (21) eine Ablagefläche aufweist, die für eine Aufnahme eines Transportbehälters, insbesondere einer Faltschachtel, ausgebildet ist.

7. Lebensmittelautomat (1) nach einem der Ansprüche 1 bis 5, **dadurch gekennzeichnet, dass** der Zwischenspeicher (23) als Aufnahmeschacht mit einer umlaufenden Schachtwand (24) ausgebildet ist, wobei die Schachtwand (24) eine Aufnahmeöffnung (25) und eine Abgabeöffnung (26) bestimmt, wobei der Abgabeöffnung (26) ein beweglich an der Schachtwand (24) gelagerter Verschluss (27) zugeordnet ist, um die Abgabeöffnung (26) wahlweise zu öffnen oder zu verschließen, und wobei die Aufnahmeöffnung (25) in vertikaler Richtung oberhalb der Abgabeöffnung (26) angeordnet ist.

8. Lebensmittelautomat (1) nach Anspruch 7, **dadurch gekennzeichnet, dass** am Maschinengestell (2) eine Verpackungseinheit (30) angeordnet ist, die zur Bereitstellung einer Verpackung aus einem Verpackungsspeicher, zum Öffnen der Verpackung sowie zum Verschließen der Verpackung nach Entgegennahme der im Zwischenspeicher zwischengespeicherten Auswahl von Lebensmitteln (31) ausgebildet ist.

9. Lebensmittelautomat (1) nach einem der vorhergehenden Ansprüche, **dadurch gekennzeichnet, dass** der Manipulator (51) mehrere Armabschnitte (56, 59, 62) aufweist, die jeweils durch Gelenke (55, 58, 61) miteinander verbunden sind, und dass ein Arbeitsbereich des Manipulators (51) die Warenauslage (3, 4) und den Warenträger (5) umfasst.

10. Lebensmittelautomat (1) nach Anspruch 9, **dadurch gekennzeichnet, dass** die Warenauslagen (3, 4) jeweils angrenzend an einen Bewegungsraum (18) für den Manipulator (51) angeordnet sind, in dem der Manipulator (51) mit einer kompakten Anordnung der Armabschnitte (56, 59, 62) in vertikaler Richtung bewegt werden kann.
